# EUROPEAN PATENT APPLICATION

(11) **EP 4 697 455 A2**
(43) Date of publication of application: **18.02.2026**
(21) Application number: 25226725.7
(22) Date of filing: 23.12.2025
(51) Int. Cl.: H01M 10/653, H01M 10/6551, H01M 10/6555, H01M 10/6571, H01M 10/658, H01M 50/264, H01M 50/293

(54) **BATTERY PACK AND ELECTRICAL DEVICE**

(30) Priority: 31.12.2024 CN 202411997063
(71) Applicant: Xiamen Ampack Technology Limited, Xiamen City, Fujian Province, 361000 (CN)
(72) Inventor: LING, Xianjin, Xiamen City, 361000 (CN)
(74) Representative: Kraus & Lederer PartGmbB

(57) **Abstract**

Some embodiments of this application provide a battery pack and an electrical device. The battery pack includes a shell, a cell assembly, and a plurality of thermally conductive pieces. The shell is provided with a top wall and a bottom wall disposed opposite to each other along a first direction. The cell assembly is disposed inside the shell. The cell assembly includes a plurality of battery cells arranged along the first direction. Each thermally conductive piece includes a thermally conductive portion and a connecting portion connected to the thermally conductive portion. Each thermally conductive portion is located between different adjacent battery cells. The thermally conductive portion is connected to at least one of the adjacent battery cells. The connecting portion is connected to the top wall or the bottom wall.

## Description

### TECHNICAL FIELD

This application relates to the technical field of batteries, and in particular, to a battery pack and an electrical device.

### BACKGROUND

A battery pack primarily includes a shell and a cell assembly disposed in the shell. During charging and discharging, the cell assembly generates heat, and the heat is transferred to the shell for dissipation. However, the heat generated by the cell assembly is not easily transferable to the shell, thereby resulting in heat accumulation at the center of the cell assembly, and affecting the safety of the battery pack.

### SUMMARY

Some embodiments of this application provide a battery pack and an electrical device to improve safety of the battery pack.

According to a first aspect, an embodiment of this application provides a battery pack. The battery pack includes a shell, a cell assembly, and a plurality of thermally conductive pieces. The shell is provided with a top wall and a bottom wall disposed opposite to each other along a first direction. The cell assembly is disposed inside the shell. The cell assembly includes a plurality of battery cells arranged along the first direction. Each thermally conductive pieces includes a thermally conductive portion and a connecting portion connected to the thermally conductive portion. Each thermally conductive portion is located between different adjacent battery cells. The thermally conductive portion is connected to at least one of the adjacent battery cells. The connecting portion is connected to the top wall or the bottom wall.

In one embodiment, each thermally conductive portion is connected to a different battery cell. The each thermally conductive portion is bonded and fixed to a corresponding battery cell.

In one or more optional embodiments, the cell assembly includes N battery cells. The N battery cells include a first battery cell closest to the top wall and an N^{th} battery cell closest to the bottom wall. The first battery cell is connected to the top wall. The N^{th} battery cell is connected to the bottom wall. N-2 thermally conductive pieces are disposed. Each battery cell located between the first battery cell and the N^{th} battery cell is connected to one thermally conductive portion, where N is a positive integer greater than 2.

In one or more optional embodiments, each thermally conductive piece includes an extension portion. The extension portion is located on one side of the cell assembly along a second direction. At least two extension portions are located on the same side of the cell assembly along the second direction. Along a third direction, projections of the at least two extension portions are spaced apart from each other. The first direction, the second direction, and the third direction are perpendicular to each other.

In one or more optional embodiments, each extension portion is spaced apart from each battery cell, or each extension portion is in direct contact with each battery cell.

In one or more optional embodiments, the cell assembly includes a fixing piece. The fixing piece surrounds the plurality of battery cells along the first direction and the second direction. The fixing piece fixes the plurality of battery cells. Along the first direction, a projection of the fixing piece is spaced apart from a projection of each thermally conductive piece. Each battery cell includes electrode terminals. The electrode terminals are located on one side of the cell assembly along the third direction.

In one or more optional embodiments, at least two connecting portions are located on the same side of the cell assembly along the first direction. Along the first direction, projections of the at least two connecting portions are spaced apart from each other.

In one or more optional embodiments, the battery pack includes a first heat transfer piece. The first heat transfer piece is disposed between the top wall and the cell assembly. The first heat transfer piece is connected to the first battery cell. A thermal conductivity of the first heat transfer piece is greater than or equal to 1 W/(m·K).

In one or more optional embodiments, the thermal conductivity of the first heat transfer piece at 25 °C is less than or equal to 10 W/(m·K).

In one or more optional embodiments, the first heat transfer piece is connected to a part of the first connecting portion. The first heat transfer piece is connected to the first connecting portion and a first heat sink. The first heat sink is exposed outside the battery pack. The first heat transfer piece can reduce transfer of the force borne by the first heat sink to the first connecting portion.

In one or more optional embodiments, the first thermally conductive piece is a graphite-based thermally conductive piece, and the first heat transfer piece can alleviate the reduction in the heat transfer efficiency caused by the movement of graphite.

In one or more optional embodiments, the first heat transfer piece is compressed. The first heat transfer piece abuts between the first connecting portion and the first heat sink. Optionally, the first heat transfer piece includes a silicone thermal pad.

In one or more optional embodiments, the first heat transfer piece is connected to a part of the fourth connecting portion. The first heat transfer piece is connected to the fourth connecting portion and the first heat sink. The first heat sink is exposed outside the battery pack. The first heat transfer piece can reduce transfer of the force borne by the first heat sink to the fourth connecting portion.

In one or more optional embodiments, the fourth thermally conductive piece is a graphite-based thermally conductive piece, and the first heat transfer piece can alleviate the reduction in the heat transfer efficiency caused by the movement of graphite.

In one or more optional embodiments, the first heat transfer piece is compressed. The first heat transfer piece abuts between the fourth connecting portion and the first heat sink. Optionally, the first heat transfer piece includes a silicone thermal pad.

In one or more optional embodiments, the battery pack includes a second heat transfer piece. The second heat transfer piece is disposed between the bottom wall and the cell assembly. The second heat transfer piece is connected to the N^{th} battery cell. The thermal conductivity of the second heat transfer piece is greater than or equal to 1 W/(m·K).

In one or more optional embodiments, the thermal conductivity of the second heat transfer piece at 25 °C is less than or equal to 10 W/(m·K).

In one or more optional embodiments, the second heat transfer piece includes, but is not limited to, a silicone thermal pad.

In one or more optional embodiments, the second heat transfer piece is connected to a part of the second connecting portion. The second heat transfer piece is connected to the second connecting portion and the second heat sink. The second heat sink is exposed outside the battery pack. The second heat transfer piece can reduce transfer of the force borne by the second heat sink to the second connecting portion.

In one or more optional embodiments, the second thermally conductive piece is a graphite-based thermally conductive piece, and the second heat transfer piece can alleviate the reduction in the heat transfer efficiency caused by the movement of graphite.

In one or more optional embodiments, the second heat transfer piece is compressed. The second heat transfer piece abuts between the second connecting portion and the second heat sink. Optionally, the second heat transfer piece includes a silicone thermal pad.

In one or more optional embodiments, the second heat transfer piece is connected to a part of the third connecting portion. The second heat transfer piece is connected to the third connecting portion and the second heat sink. The second heat sink is exposed outside the battery pack. The second heat transfer piece can reduce transfer of the force borne by the second heat sink to the third connecting portion.

In one or more optional embodiments, the third thermally conductive piece is a graphite-based thermally conductive piece, and the second heat transfer piece can alleviate the reduction in the heat transfer efficiency caused by the movement of graphite.

In one or more optional embodiments, the second heat transfer piece is compressed. The second heat transfer piece abuts between the third connecting portion and the second heat sink. Optionally, the second heat transfer piece includes a silicone thermal pad.

In one or more optional embodiments, the battery pack includes a heating element. The heating element includes a plurality of heating portions and a plurality of bridging portions. Each bridging portion connects two adjacent heating portions. Each heating portion is disposed between two different adjacent battery cells. The heating portion is connected to at least one battery cell. The bridging portion is disposed on one side of the cell assembly along the second direction.

In one or more optional embodiments, the heating element includes a heating wire. Both sides of the heating wire are overlaid with an insulation film. The thermal conductivity of the insulation film at 25 °C is greater than or equal to 0.1 W/(m·K) and less than or equal to 0.2 W/(m·K).

In one or more optional embodiments, the heating element includes N-2 heating portions. The cell assembly includes N-3 buffers. Each buffer is located between different adjacent battery cells. The buffer is configured to provide an expansion space for the battery cell. The thermal conductivity of the buffer at 25 °C is less than 0.5 W/(m·K). Each thermally conductive portion is connected to one adjacent battery cell. The thermally conductive portion is separated from another adjacent battery cell by the heating portion or the buffer, or the thermally conductive portion is physically separated from another adjacent battery cell.

In one or more optional embodiments, the thermally conductive piece is a graphite-based thermally conductive piece. The graphite-based thermally conductive piece is bent along a length direction thereof to form the thermally conductive portion and the connecting portion. Along the length direction of the graphite-based thermally conductive piece, an in-plane thermal conductivity of the graphite-based thermally conductive piece is greater than or equal to 800 W/(m·K).

In one or more optional embodiments, along a thickness direction of the graphite-based thermal conductive piece, the thermal conductivity of the graphite-based thermally conductive piece is less than or equal to 100 W/(m·K).

According to a second aspect, an embodiment of this application provides an electrical device. The electrical device includes the battery pack according to the first aspect. The battery pack is configured to provide electrical energy.

In the battery pack provided in an embodiment of this application, a thermally conductive piece is disposed, the thermally conductive portion is disposed between two adjacent battery cells, and the connecting portion is connected to the top wall or the bottom wall of the shell. The connecting portion can transfer the heat generated at the center of the cell assembly to the shell during the charging and discharging of each battery cell, thereby effectively reducing the accumulation of heat at the center of the cell assembly and improving the safety of the battery pack.

### BRIEF DESCRIPTION OF DRAWINGS

To describe technical solutions in some embodiments of this application more clearly, the following outlines accompanying drawings to be used in some embodiments of this application. A person of ordinary skill in the art may derive other drawings from these accompanying drawings.
FIG. 1 is a schematic structural diagram of a battery pack according to some embodiments of this application;
FIG. 2 is an exploded view of a battery pack according to some embodiments of this application;
FIG. 3 is a schematic structural diagram of a cell assembly of a battery pack according to some embodiments of this application;
FIG. 4 is another schematic structural diagram of a cell assembly of a battery pack according to some embodiments of this application;
FIG. 5 is still another schematic structural diagram of a cell assembly of a battery pack according to some embodiments of this application;
FIG. 6 is a schematic structural diagram of a thermally conductive piece of a battery pack according to some embodiments of this application;
FIG. 7 is an exploded view of a cell assembly of a battery pack according to some embodiments of this application;
FIG. 8 is a schematic structural diagram of a first thermally conductive piece of a battery pack according to some embodiments of this application;
FIG. 9 is a schematic structural diagram of a second thermally conductive piece of a battery pack according to some embodiments of this application;
FIG. 10 is a schematic structural diagram of a third thermally conductive piece of a battery pack according to some embodiments of this application;
FIG. 11 is a schematic structural diagram of a fourth thermally conductive piece of a battery pack according to some embodiments of this application;
FIG. 12 is a schematic structural diagram of a thermally conductive piece of a battery pack in a spread-out state according to some embodiments of this application;
FIG. 13 is a schematic structural diagram of a part shown in FIG. 12; and
FIG. 14 is a schematic structural diagram of a part of a heating element of a battery pack according to some embodiments of this application.

List of reference signs:1. shell; 11. housing; 111. top wall; 112. bottom wall; 113. first opening; 114. second opening; 12. cover; 131. first heat sink; 132. second heat sink;
2. cell assembly; 21. battery cell; 21a. electrode terminal; 211. first battery cell; 212. second battery cell; 213. third battery cell; 214. fourth battery cell; 215. fifth battery cell; 216. sixth battery cell;
3. thermally conductive piece; 31. thermally conductive portion; 32. extension portion; 33. connecting portion; 34. graphite layer; 35. insulation layer; 36. bonding layer;
3a. first thermally conductive piece; 31a. first thermally conductive portion; 32a. first extension portion; 33a. first connecting portion; 34a. first bent portion; 35a. second bent portion;
3b. second thermally conductive piece; 31b. second thermally conductive portion; 32b. second extension portion; 33b. second connecting portion; 34b. third bent portion; 35b. fourth bent portion;
3c. third thermally conductive piece; 31c. third thermally conductive portion; 32c. third extension portion; 33c. third connecting portion; 34c. fifth bent portion; 35c. sixth bent portion;
3d. fourth thermally conductive piece; 31d. fourth thermally conductive portion; 32d. fourth extension portion; 33d. fourth connecting portion; 34d. seventh bent portion; 35d. eighth bent portion;
41. first heat transfer piece; 42. second heat transfer piece;
5. buffer; 51. first buffer; 52. second buffer;
6. fixing piece;
7. heating element; 71. heating portion; 71a. first heating portion; 71b. second heating portion; 71c. third heating portion; 71d. fourth heating portion; 72. bridging portion; 72a. first bridging portion; 72b. second bridging portion; 72c. third bridging portion; 73. heating wire; 74. insulation film; 75. adhesive layer;
X. first direction; Y. second direction; Z. third direction

### DETAILED DESCRIPTION OF EMBODIMENTS

The following describes features and exemplary embodiments of each aspect of this application in detail. To make the objectives, technical solutions, and advantages of this application clearer, the following describes this application in further detail with reference to accompanying drawings and specific embodiments. Understandably, the specific embodiments described herein are merely intended to explain this application but not to limit this application. For a person skilled in the art, this application may be implemented without some of the specific details. The following description of the embodiments is only intended to enable a better understanding of this application by illustrating examples of this application.

It is hereby noted that the relational terms herein such as "first" and "second" are used merely to differentiate one entity or operation from another, but do not involve or imply any actual relationship or sequence between the entities or operations. Moreover, the terms "include", "comprise", and any variation thereof are intended to cover a non-exclusive inclusion relationship by which a process, method, object, or device that includes or comprises a series of elements not only includes such elements, but also includes other elements not expressly specified or also includes inherent elements of the process, method, object, or device. Unless otherwise specified in the context, reference to a process, method, object, or device that "includes" or "comprises" a specific number of elements does not exclude other identical or equivalent elements existent in the process, method, object, or device.

The following describes a battery pack and an electrical device of this application with reference to drawings.

It is hereby noted that the terms "first direction X", "second direction Y", and "third direction Z" used herein are merely intended to more clearly illustrate the structure of this application with reference to the drawings, but not intended to limit this application. The first direction X, the second direction Y, and the third direction Z are at an angle to each other. Optionally, the first direction X, the second direction Y, and the third direction Z are perpendicular to each other.

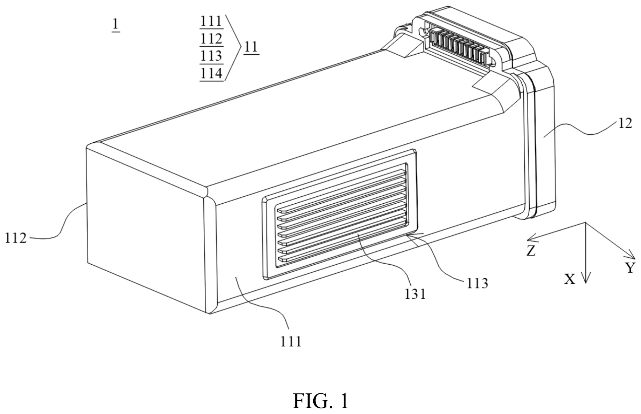

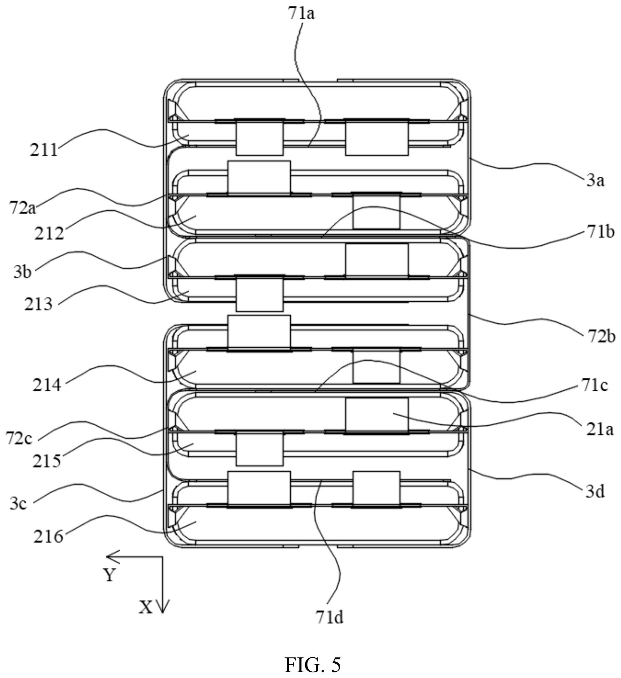

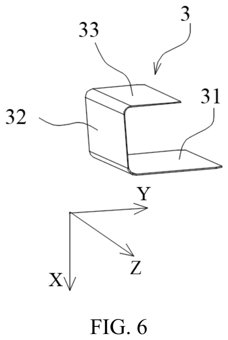

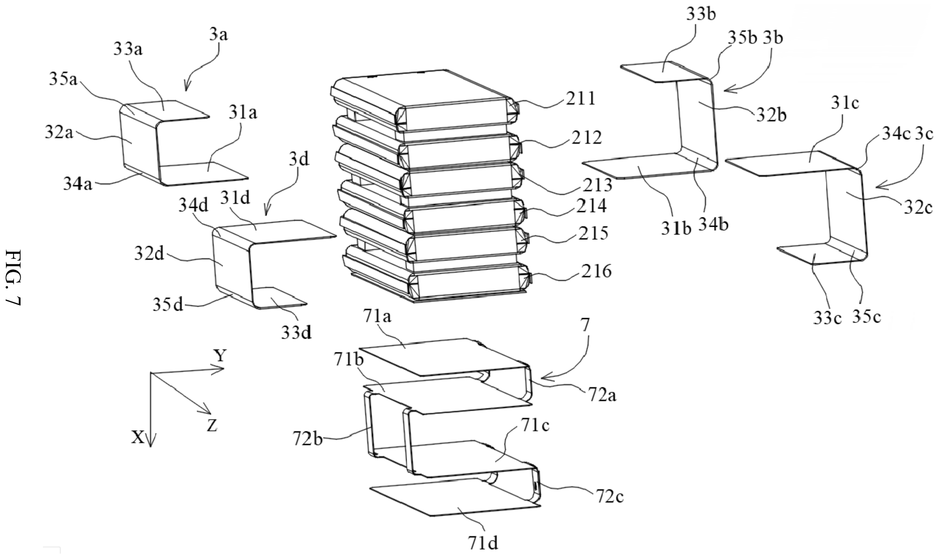

As shown in FIG. 1 to FIG. 7, an embodiment of this application provides a battery pack. The battery pack includes a shell 1 and a cell assembly 2. The cell assembly 2 is disposed in the shell 1. The cell assembly 2 includes a plurality of battery cells 21 arranged along the first direction X, and provide electrical energy through the battery cells 21. The heat in the shell 1 is transferred out of the shell 1 to cool the battery pack.

In some embodiments, the battery pack includes a plurality of thermally conductive pieces 3. Each thermally conductive piece 3 includes a thermally conductive portion 31 and a connecting portion 33. Each thermally conductive portion 31 is located between different adjacent battery cells 21. The thermally conductive portion 31 is connected to at least one battery cell 21 among the adjacent battery cells 21. The heat generated during the charging and discharging of the battery cells 21 is absorbed by the thermally conductive portion 31. The connecting portion 33 is connected to the thermally conductive portion 31. The heat absorbed by the thermally conductive portion 31 is transferred to the connecting portion 33.

In some embodiments, the housing 11 includes a top wall 111 and a bottom wall 112 disposed opposite to each other along the first direction X. The connecting portion 33 is located between the cell assembly 2 and the top wall 111, and the connecting portion 33 is connected to the top wall 111; or the connecting portion 33 is located between the cell assembly 2 and the bottom wall 112, and the connecting portion 33 is connected to the bottom wall 112. The heat absorbed by the thermally conductive portion 31 is dissipated to the outside of the shell 1 through the top wall 111 or the bottom wall 112, thereby achieving a cooling effect.

The plurality of connecting portions 33 are spaced apart from each other so that each thermally conductive piece 3 forms an independent heat dissipation path, thereby facilitating heat dissipation.

In the battery pack provided in these embodiments of this application, a thermally conductive piece 3 is disposed, the thermally conductive portion 31 is disposed between two adjacent battery cells 21, and the connecting portion 33 is connected to the top wall 111 or the bottom wall 112 of the shell 1. The connecting portion 33 can transfer the heat generated at the center of the cell assembly 2 to the shell 1 during the charging and discharging of each battery cell 21, thereby effectively reducing the accumulation of heat at the center of the cell assembly 2 and improving the safety of the battery pack.

In some embodiments, the shell 1 includes a housing 11 and a cover 12. The cover 12 and the housing 11 are butt-joined along the third direction Z to jointly define a closed cavity. The cell assembly 2 is disposed in the cavity.

In some embodiments, optionally, the housing 11 is an integrally formed structure, thereby improving the structural strength and hermeticity of the housing 11. The cover 12 is detachably and hermetically connected to the housing 11.

In some embodiments, the connection may be implemented in manners including direct contact between the two components and bonding such as bonding by double-sided tape.

In some embodiments, as shown in FIG. 1, the shell 1 includes a first heat sink 131. The top wall 111 is provided with a first opening 113. The first heat sink 131 disposed in the first opening 113. The connecting portion 33 is connected to the first heat sink 131.

In some embodiments, the first heat sink 131 is integrally formed and connected to the top wall 111.

In some embodiments, a surface of the first heat sink 131, which faces the cell assembly 2, is flush with the inner surface of the top wall 111; or a surface of the first heat sink 131, which faces the cell assembly 2, protrudes beyond the inner surface of the top wall 111. The cell assembly 2 reliably abuts the first heat sink 131, thereby gripping the connecting portion 33 between the first heat sink 131 and the cell assembly 2. In this way, the connecting portion 33 abuts the first heat sink 131, and the connecting portion 33 is in direct contact with the first heat sink 131, thereby improving the heat transfer efficiency of the thermally conductive piece 3.

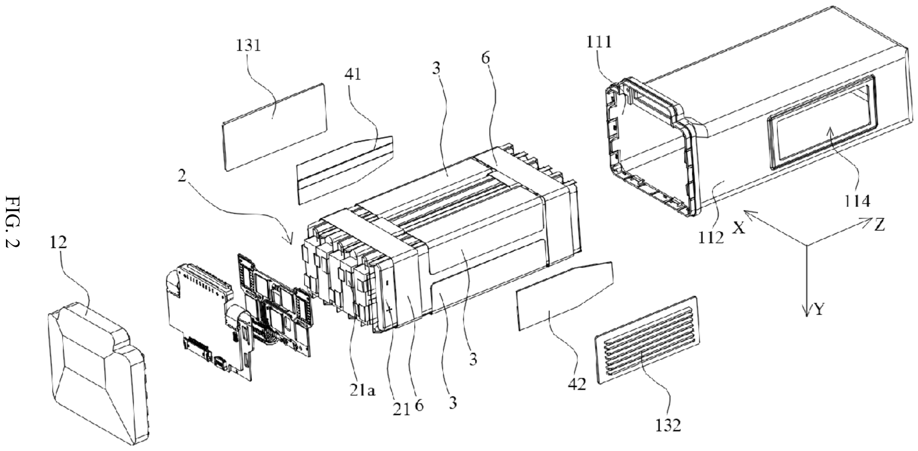

In some embodiments, as shown in FIG. 2, the shell 1 includes a second heat sink 132. The bottom wall 112 is provided with a second opening 114. The second heat sink 132 disposed in the second opening 114. The connecting portion 33 is connected to the second heat sink 132.

In some embodiments, the second heat sink 132 is integrally formed and connected to the bottom wall 112.

In some embodiments, a surface of the second heat sink 132, which faces the cell assembly 2, is flush with the inner surface of the bottom wall 112; or a surface of the second heat sink 132, which faces the cell assembly 2, protrudes beyond the inner surface of the bottom wall 112. The cell assembly 2 reliably abuts the second heat sink 132, thereby gripping the connecting portion 33 between the second heat sink 132 and the cell assembly 2. In this way, the connecting portion 33 abuts the second heat sink 132, and the connecting portion 33 is in direct contact with the second heat sink 132, thereby improving the heat transfer efficiency of the thermally conductive piece 3.

In some embodiments, each thermally conductive portion 31 is connected to a different battery cell 21, and is configured to conduct the heat generated by different battery cells 21, so as to implement heat dissipation for each battery cell 21 separately.

In some embodiments, the each thermally conductive portion 31 is bonded and fixed to the corresponding battery cell 21 to retain the position of the thermally conductive portion 31 so that the thermally conductive portion 31 is reliably connected to the corresponding battery cell 21.

In some embodiments, as shown in FIG. 2 to FIG. 5 and FIG. 7, the cell assembly 2 includes N battery cells 21. The N battery cells 21 include a first battery cell 211 closest to the top wall 111 and an N^{th} battery cell 21 closest to the bottom wall 112. The first battery cell 211 is connected to the top wall 111. The heat generated by the first battery cell 211 is transferred to the top wall 111. The N^{th} battery cell 21 is connected to the bottom wall 112. The heat generated by the N^{th} battery cell 21 is transferred to the bottom wall 112, where, N is a positive integer greater than 2.

In some embodiments, N-2 thermally conductive pieces 3 are disposed. Each battery cell 21 located between the first battery cell 211 and the N^{th} battery cell 21 is connected to one thermally conductive piece 31, so that the heat generated by each battery cell 21 between the first battery cell 211 and the N^{th} battery cell 21 is transferred to the top wall 111 or the bottom wall 112 through one thermally conductive piece 3 for dissipation. where, N is a positive integer greater than 2.

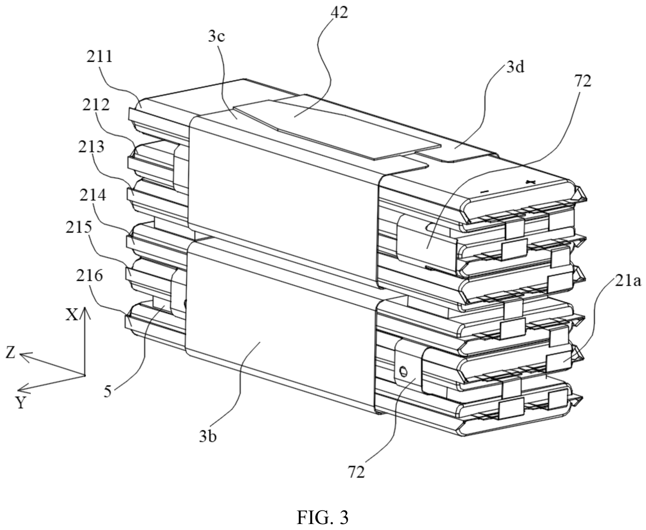

In some embodiments, as shown in FIG. 3 to FIG. 7, the thermally conductive piece 3 includes an extension portion 32. The extension portion 32 is configured to conduct heat between the thermally conductive portion 31 and the connecting portion 33. The extension portion 32 is located on one side of the cell assembly 2 along the second direction Y.

In some embodiments, the thermally conductive portion 31, the extension portion 32, and the connecting portion 33 are integrally formed and connected to form a complete sheet structure. The thermally conductive portion 31, the extension portion 32, and the connecting portion 33 each are formed by bending the thermally conductive piece 3.

In some embodiments, at least two extension portions 32 are located on the same side of the cell assembly 2 along the second direction Y. Along the third direction Z, projections of the at least two extension portions 32 are spaced apart from each other to form independent heat dissipation paths separately, thereby reducing heat accumulation and improving the heat transfer efficiency.

In some embodiments, the extension portion 32 is spaced apart from each battery cell 21, the extension portion 32 is in direct contact with each battery cell 21. The extension portion 32 is not fixed to the cell assembly 2, thereby reducing the pulling force on the extension portion 32 when the cell assembly 2 expands and changes in size along the first direction X, and protecting the extension portion 32.

In some embodiments, as shown in FIG. 2 and FIG. 3, each battery cell 21 includes electrode terminals 21a. Electrical connection between the battery cells 21 are implemented through the electrode terminals 21a. The electrode terminals 21a are located on one side of the battery cell 21 along the third direction Z. The thermally conductive piece 3 is disposed in a different direction of the battery cell 21 than the electrode terminals 21a, thereby reducing interference between the electrode terminals 21a and the thermally conductive piece 3.

In some embodiments, at least two connecting portions 33 are located on the same side of the cell assembly 2 along the first direction X. Along the first direction X, projections of the at least two connecting portions 33 are spaced apart from each other, without mutual contact between the connecting portions 33. In this way, independent heat dissipation paths are formed separately, thereby reducing heat accumulation and improving the heat transfer efficiency.

In some embodiments, along the first direction X, a length of the extension portion 32 is greater than a distance between the connecting portion 33 and the thermally conductive portion 31 to form a redundant space, thereby alleviating the pulling on and damage to the extension portion 32 when the cell assembly 2 expands along the first direction X.

In some embodiments, as shown in FIG. 2 to FIG. 5 and FIG. 7, as an example, the cell assembly 2 includes six battery cells 21, that is, N is equal to 6.

The battery cells 21 include a first battery cell 211, a second battery cell 212, a third battery cell 213, a fourth battery cell 214, a fifth battery cell 215, and a sixth battery cell 216 arranged along the first direction X.

The thermally conductive piece 3 includes a first thermally conductive piece 3a, a second thermally conductive piece 3b, a third thermally conductive piece 3c, and a fourth thermally conductive piece 3d.

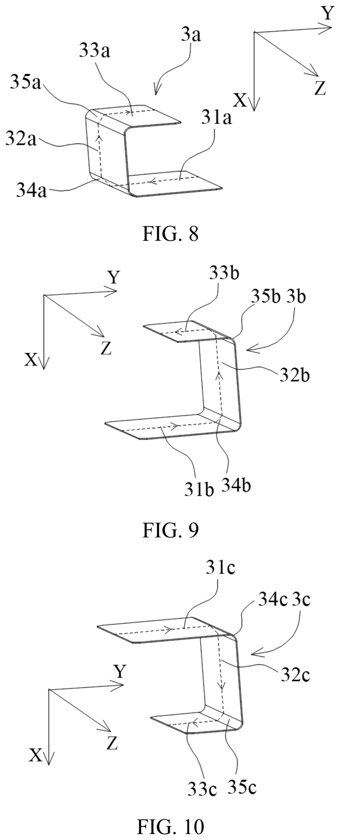

In some embodiments, as shown in FIG. 8, the first thermally conductive piece 3a includes a first thermally conductive portion 31a, a first extension portion 32a, and a first connecting portion 33a. The first extension portion 32a is configured to conduct heat between the first thermally conductive portion 31a and the first connecting portion 33a. The first thermally conductive portion 31a is located between the second battery cell 212 and the third battery cell 213, and the first thermally conductive portion 31a is connected to the second battery cell 212. The heat generated during the charging and discharging of the second battery cell 212 is transferred through the first thermally conductive portion 31a.

In some embodiments, the first thermally conductive portion 31a is bonded to the second battery cell 212 to retain the position of the first thermally conductive portion 31a and make the connection more reliable between the first thermally conductive portion 31a and the second battery cell 212.

In some embodiments, the first thermally conductive portion 31a, the first extension portion 32a, and the first connecting portion 33a are integrally formed and connected to form a complete sheet structure. The first thermally conductive portion 31a, the first extension portion 32a, and the first connecting portion 33a each are formed by bending the first thermally conductive piece 3a.

In some embodiments, the first connecting portion 33a is located between the top wall 111 and the first battery cell 211. The first connecting portion 33a is connected to the top wall 111. The heat absorbed by the first thermally conductive portion 31a is transferred to the top wall 111 through the first connecting portion 33a, and dissipated through the top wall 111, thereby achieving a cooling effect.

In some embodiments, the first connecting portion 33a is bonded to the first battery cell 211 to retain the position of the first connecting portion 33a, so that the first connecting portion 33a is reliably connected to the top wall 111.

In some embodiments, the first extension portion 32a is located on one side of the cell assembly 2, along the second direction Y, and the first extension portion 32a and the first battery cell 211 are spaced apart from each other , or the first extension portion 32a is in direct contact with the first battery cell 211, the first extension portion 32a and the second battery cell 212 are spaced apart from each other, or the first extension portion 32a is in direct contact with the first battery cell 211. The first extension portion 32a is not fixed to the first battery cell 211 or the second battery cell 212. When the first battery cell 211 or the second battery cell 212 expands and changes in size along the first direction X, the above arrangement reduces the pulling force on the first extension portion 32a, thereby protecting the first extension portion 32a.

In some embodiments, a length of the first extension portion 32a is greater than a distance between the first connecting portion 33a and the first thermally conductive portion 31a along the first direction X to form a redundant space, thereby alleviating the pulling on and damage to the first extension portion 32a when the cell assembly 2 expands along the first direction X.

In some embodiments, a first bent portion 34a is connected between the first extension portion 32a and the first thermally conductive portion 31a, and a second bent portion 35a is connected between the first extension portion 32a and the first connecting portion 33a. When the cell assembly 2 expands along the first direction X, the first bent portion 34a and the second bent portion 35a can be deformed to alleviate the pulling on and damage to the first extension portion 32a.

In some embodiments, as shown in FIG. 9, the second thermally conductive piece 3b includes a second thermally conductive portion 31b, a second extension portion 32b, and a second connecting portion 33b. The second extension portion 32b is configured to conduct heat between the second thermally conductive portion 31b and the second connecting portion 33b. The second thermally conductive portion 31b is located between the third battery cell 213 and the fourth battery cell 214, and the second thermally conductive portion 31b is connected to the third battery cell 213. The heat generated during the charging and discharging of the third battery cell 213 is transferred through the second thermally conductive portion 31b.

In some embodiments, the second thermally conductive portion 31b is bonded to the third battery cell 213 to retain the position of the second thermally conductive portion 31b and make the connection more reliable between the second connecting portion 33b and the top wall 111.

In some embodiments, the second thermally conductive portion 31b, the second extension portion 32b, and the second connecting portion 33b are integrally formed and connected to form a complete sheet structure. The second thermally conductive portion 31b, the second extension portion 32b, and the second connecting portion 33b each are formed by bending the second thermally conductive piece 3b.

In some embodiments, the second connecting portion 33b is located between the top wall 111 and the first battery cell 211. The second connecting portion 33b is connected to the top wall 111. The heat absorbed by the second thermally conductive portion 31b is transferred to the top wall 111 through the second connecting portion 33b, and dissipated through the top wall 111, thereby achieving a cooling effect.

In some embodiments, the second connecting portion 33b is bonded to the first battery cell 211 to retain the position of the second connecting portion 33b and make the connection more reliable between the second connecting portion 33b and the top wall 111.

In some embodiments, the second extension portion 32b is located on one side of the cell assembly 2 along the second direction Y, and the second extension portion 32b and the first battery cell 211 are spaced apart from each other, or the second extension portion 32b in direct contact with the first battery cell 211;, the second extension portion 32b and the second battery cell 212 are spaced apart from each other, or the second extension portion 32b in direct contact with the second battery cell 212; and the second extension portion 32b and the third battery cell 213 are spaced apart from each other, or the second extension portion 32b in direct contact with the third battery cell 213. The second extension portion 32b is not fixed to the first battery cell 211, the second battery cell 212, or the third battery cell 213. When the first battery cell 211, the second battery cell 212, or the third battery cell 213 expands and changes in size along the first direction X, the above arrangement reduces the pulling force on the second extension portion 32b, thereby protecting the second extension portion 32b.

In some embodiments, the first extension portion 32a and the second extension portion 32b are oppositely disposed on two sides of the cell assembly 2 along the second direction Y. The heat generated by the second battery cell 212 and the heat generated by the third battery cell 213 are conducted and dissipated through different paths, thereby improving the heat dissipation efficiency of the battery pack.

In some embodiments, along the first direction X, a projection of the first connecting portion 33a is separate from a projection of the second connecting portion 33b. The heat generated by the second battery cell 212 and the heat generated by the third battery cell 213 are conducted and dissipated through different paths, thereby improving the heat dissipation efficiency of the battery pack.

In some embodiments, a length of the second extension portion 32b is greater than a distance between the second connecting portion 33b and the second thermally conductive portion 31b along the first direction X to form a redundant space, thereby alleviating the pulling on and damage to the second extension portion 32b when the cell assembly 2 expands along the first direction X.

In some embodiments, a third bent portion 34b is connected between the second extension portion 32b and the second thermally conductive portion 31b, and a fourth bent portion 35b is connected between the first extension portion 32a and the first connecting portion 33a. When the cell assembly 2 expands along the first direction X, the third bent portion 34b and the fourth bent portion 35b can be deformed to alleviate the pulling on and damage to the second extension portion 32b.

In some embodiments, as shown in FIG. 10, the third thermally conductive piece 3c includes a third thermally conductive portion 31c, a third extension portion 32c, and a third connecting portion 33c. The third extension portion 32c is configured to conduct heat between the third thermally conductive portion 31c and the third connecting portion 33c. The third thermally conductive portion 31c is located between the third battery cell 213 and the fourth battery cell 214, and the third thermally conductive portion 31c is connected to the fourth battery cell 214. The heat generated during the charging and discharging of the fourth battery cell 214 is transferred through the third thermally conductive portion 31c.

In some embodiments, the third thermally conductive portion 31c is bonded to the fourth battery cell 214 to retain the position of the third thermally conductive portion 31c and make the connection more reliable between the third thermally conductive portion 31c and the fourth battery cell 214.

In some embodiments, the third thermally conductive portion 31c, the third extension portion 32c, and the third connecting portion 33c are integrally formed and connected to form a complete sheet structure. The third thermally conductive portion 31c, the third extension portion 32c, and the third connecting portion 33c each are formed by bending the third thermally conductive piece 3c.

In some embodiments, the third connecting portion 33c is located between the bottom wall 112 and the sixth battery cell 216. The heat absorbed by the third thermally conductive portion 31c is transferred to the bottom wall 112 through the third connecting portion 33c, and dissipated through the bottom wall 112, thereby achieving a cooling effect.

In some embodiments, the third connecting portion 33c is bonded to the sixth battery cell 216 to retain the position of the third connecting portion 33c and make the connection more reliable between the third connecting portion 33c and the bottom wall 112.

In some embodiments, the third extension portion 32c is located on one side of the cell assembly 2 along the second direction Y, and the third extension portion 32c is and the fourth battery cell 214 are spaced apart from each other, or the third extension portion 32c is in direct contact with the fourth battery cell 214; the third extension portion 32c and the fifth battery cell 215 are spaced apart from each other, or the third extension portion 32c is in direct contact with the fifth battery cell 215; and the third extension portion 32c and the sixth battery cell 216 are spaced apart from each other, or the third extension portion 32c is in direct contact with the sixth battery cell 216. The third extension portion 32c is not fixed to the fourth battery cell 214, the fifth battery cell 215, or the sixth battery cell 216. When the fourth battery cell 214, the fifth battery cell 215, or the sixth battery cell 216 expands and changes in size along the first direction X, the above arrangement reduces the pulling force on the third extension portion 32c, thereby protecting the third extension portion 32c.

In some embodiments, the third extension portion 32c and the second extension portion 32b are disposed on the same side of the cell assembly 2 along the second direction Y. Along the second direction Y, a projection of the third extension portion 32cand a projection of the second extension portion 32b are spaced apart from each other. The heat generated by the fourth battery cell 214 and the heat generated by the third battery cell 213 are conducted and dissipated through different paths, thereby improving the heat dissipation efficiency of the battery pack.

In some embodiments, a length of the third extension portion 32c is greater than a distance between the third connecting portion 33c and the third thermally conductive portion 31c along the first direction X to form a redundant space, thereby alleviating the pulling on and damage to the third extension portion 32c when the cell assembly 2 expands along the first direction X.

In some embodiments, a fifth bent portion 34c is connected between the third extension portion 32c and the third thermally conductive portion 31c, and a sixth bent portion 35c is connected between the third extension portion 32c and the third connecting portion 33c. When the cell assembly 2 expands along the first direction X, the fifth bent portion 34c and the sixth bent portion 35c can be deformed to alleviate the pulling on and damage to the third extension portion 32c.

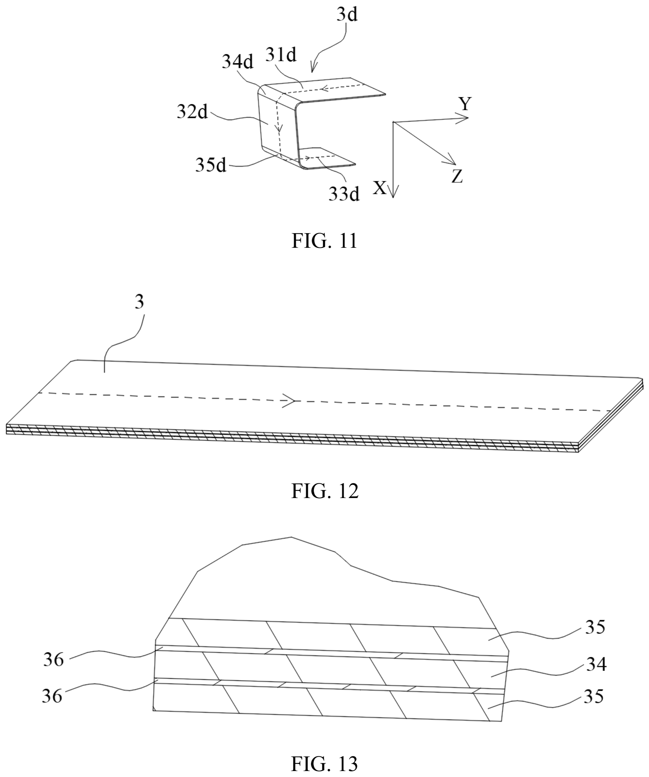

In some embodiments, as shown in FIG. 11, the fourth thermally conductive piece 3d includes a fourth thermally conductive portion 31d, a fourth extension portion 32d, and a fourth connecting portion 33d. The fourth extension portion 32d is configured to conduct the heat between the fourth thermally conductive portion 31d and the fourth connecting portion 33d. The fourth thermally conductive portion 31d is located between the fourth battery cell 214 and the fifth battery cell 215, and the fourth thermally conductive portion 31d is connected to the fifth battery cell 215. The heat generated during the charging and discharging of the fifth battery cell 215 is absorbed through the fourth thermally conductive portion 31d.

In some embodiments, the fourth thermally conductive portion 31d is bonded to the fifth battery cell 215 to retain the position of the fourth thermally conductive portion 31d and make the connection more reliable between the fourth thermally conductive portion 31d and the fifth battery cell 215.

In some embodiments, the fourth thermally conductive portion 31d, the fourth extension portion 32d, and the fourth connecting portion 33d are integrally formed and connected to form a complete sheet structure. The fourth thermally conductive portion 31d, the fourth extension portion 32d, and the fourth connecting portion 33d each are formed by bending the fourth thermally conductive piece 3d.

In some embodiments, the fourth connecting portion 33d is located between the bottom wall 112 and the sixth battery cell 216. The heat absorbed by the fourth thermally conductive portion 31d is transferred to the bottom wall 112 through the fourth connecting portion 33d, and dissipated through the bottom wall 112, thereby achieving a cooling effect.

In some embodiments, the fourth connecting portion 33d is bonded to the sixth battery cell 216 to retain the position of the fourth connecting portion 33d and make the connection reliable between the fourth connecting portion 33d and the bottom wall 112.

In some embodiments, the fourth extension portion 32d is located on one side of the cell assembly 2 along the second direction Y, and the fourth extension portion 32d and the fifth battery cell 215 are spaced apart from each other, or the fourth extension portion 32d is in direct contact with the fifth battery cell 215; and the fourth extension portion 32d and the sixth battery cell 216 are spaced apart from each other, or the fourth extension portion 32d is in direct contact with the sixth battery cell 216. The fourth extension portion 32d is not fixed to the fifth battery cell 215 or the sixth battery cell 216. When the fifth battery cell 215 or the sixth battery cell 216 expands and changes in size along the first direction X, the above arrangement reduces the pulling force on the fourth extension portion 32d, thereby protecting the fourth extension portion 32d.

In some embodiments, the fourth extension portion 32d and the first extension portion 32a are disposed on the same side of the cell assembly 2 along the second direction Y. Along the second direction Y, a projection of the fourth extension portion 32d and a projection of the first extension portion 32a are spaced apart from each other. The heat generated by the fifth battery cell 215 and the heat generated by the first battery cell 211 are conducted and dissipated through different paths, thereby improving the heat dissipation efficiency of the battery pack.

In some embodiments, along the first direction X, a projection of the third connecting portion 33cand a projection of the fourth connecting portion 33d are spaced apart from each other. The heat generated by the fifth battery cell 215 and the heat generated by the fourth battery cell 214 are conducted and dissipated through different paths, thereby improving the heat dissipation efficiency of the battery pack.

In some embodiments, a length of the fourth extension portion 32d is greater than a distance between the fourth connecting portion 33d and the fourth thermally conductive portion 31d along the first direction X to form a redundant space, thereby alleviating the pulling on and damage to the fourth extension portion 32d when the cell assembly 2 expands along the first direction X.

In some embodiments, a seventh bent portion 34d is connected between the fourth extension portion 32d and the fourth thermally conductive portion 31d, and an eighth bent portion 35d is connected between the fourth extension portion 32d and the fourth connecting portion 33d. When the cell assembly 2 expands along the first direction X, the seventh bent portion 34d and the eighth bent portion 35d can be deformed to alleviate the pulling on and damage to the fourth extension portion 32d.

In some embodiments, as shown in FIG. 2 to FIG. 4, the battery pack includes a first heat transfer piece 41. The first heat transfer piece 41 is disposed between the top wall 111 and the cell assembly 2. The first heat transfer piece 41 is configured to transfer the heat of the first battery cell 211 to the top wall 111 to dissipate heat for the first battery cell 211.

In some embodiments, the thermal conductivity of the first heat transfer piece 41 at 25 °C is greater than or equal to 1 W/(m·K), thereby facilitating heat conduction.

In some embodiments, the thermal conductivity of the first heat transfer piece 41 at 25 °C is less than or equal to 10 W/(m·K). The first heat transfer piece 41 includes, but is not limited to, a silicone thermal pad.

In some embodiments, the first heat transfer piece 41 is connected to a part of the first connecting portion 33a. The first heat transfer piece 41 is connected to the first connecting portion 33a and a first heat sink 131. The first heat sink 131 is exposed outside the battery pack. The first heat transfer piece 41 can reduce transfer of the force borne by the first heat sink 131 to the first connecting portion 33a.

In some embodiments, the first thermally conductive piece 3a is a graphite-based thermally conductive piece, and the first heat transfer piece 41 can alleviate the reduction in the heat transfer efficiency caused by the movement of graphite.

In some embodiments, the first heat transfer piece 41 is compressed. The first heat transfer piece 41 abuts between the first connecting portion 33a and the first heat sink 131. Optionally, the first heat transfer piece 41 includes a silicone thermal pad.

In some embodiments, the first heat transfer piece 41 is connected to a part of the fourth connecting portion 33d. The first heat transfer piece 41 is connected to the fourth connecting portion 33d and a first heat sink 131. The first heat sink 131 is exposed outside the battery pack. The first heat transfer piece 41 can reduce transfer of the force borne by the first heat sink 131 to the fourth connecting portion 33d.

In some embodiments, the fourth thermally conductive piece 3d is a graphite-based thermally conductive piece, and the first heat transfer piece 41 can alleviate the reduction in the heat transfer efficiency caused by the movement of graphite.

In some embodiments, the first heat transfer piece 41 is compressed. The first heat transfer piece 41 abuts between the fourth connecting portion 33d and the first heat sink 131. Optionally, the first heat transfer piece 41 includes a silicone thermal pad.

In some embodiments, the battery pack includes a second heat transfer piece 42. The second heat transfer piece 42 is disposed between the bottom wall 112 and the cell assembly 2. The second heat transfer piece 42 is configured to transfer the heat of the sixth battery cell 216 to the bottom wall 112 to dissipate heat for the sixth battery cell 216. The thermal conductivity of the second heat transfer piece 42 is greater than or equal to 1 W/(m·K), thereby facilitating heat conduction.

In some embodiments, the thermal conductivity of the second heat transfer piece 42 at 25 °C is less than or equal to 10 W/(m·K).

In some embodiments, the second heat transfer piece 42 includes, but is not limited to, a silicone thermal pad.

In some embodiments, the second heat transfer piece 42 is connected to a part of the second connecting portion 33b. The second heat transfer piece 42 is connected to the second connecting portion 33b and a second heat sink 132. The second heat sink 132 is exposed outside the battery pack. The second heat transfer piece 42 can reduce transfer of the force borne by the second heat sink 132 to the second connecting portion 33b.

In some embodiments, the second thermally conductive piece 3b is a graphite-based thermally conductive piece, and the second heat transfer piece 42 can alleviate the reduction in the heat transfer efficiency caused by the movement of graphite.

In some embodiments, the second heat transfer piece 42 is compressed. The second heat transfer piece 42 abuts between the second connecting portion 33b and the second heat sink 132. Optionally, the second heat transfer piece 42 includes a silicone thermal pad.

In some embodiments, the second heat transfer piece 42 is connected to a part of the third connecting portion 33c. The second heat transfer piece 42 is connected to the third connecting portion 33c and the second heat sink 132. The second heat sink 132 is exposed outside the battery pack. The second heat transfer piece 42 can reduce transfer of the force borne by the second heat sink 132 to the third connecting portion 33c.

In some embodiments, the third thermally conductive piece 3c is a graphite-based thermally conductive piece, and the second heat transfer piece 42 can alleviate the reduction in the heat transfer efficiency caused by the movement of graphite.

In some embodiments, the second heat transfer piece 42 is compressed. The second heat transfer piece 42 abuts between the third connecting portion 33c and the second heat sink 132. Optionally, the second heat transfer piece 42 includes a silicone thermal pad.

In some embodiments, the structures and thermal conductivity of the first thermally conductive piece 3a, the second thermally conductive piece 3b, the third thermally conductive piece 3c, and the fourth thermally conductive piece 3d are substantially the same.

In some embodiments, the thermally conductive piece 3 is a graphite-based thermally conductive piece. The graphite-based thermally conductive piece is bent along the length direction thereof to form the thermally conductive portion 31 and the connecting portion 33.

In some embodiments, the in-plane thermal conductivity of the graphite-based thermally conductive piece is greater than or equal to 800 W/(m·K) and less than or equal to 2000 W/(m·K), thereby enabling the thermally conductive piece 3 to be highly thermally conductive. Each thermally conductive portion 31 is bonded and fixed to a different battery cell 21, thereby reducing the movement of graphite particles in a graphite layer 34 and facilitating stabilization of the thermal conductivity of the thermally conductive piece 3.

In some embodiments, along the thickness direction of the graphite-based thermally conductive piece, the thermal conductivity of the graphite-based thermally conductive piece is greater than or equal to 30 W/(m·K) and less than or equal to 100 W/(m·K). The graphite-based thermally conductive piece mainly conducts heat along the length direction of the graphite-based thermally conductive piece, thereby enhancing heat dissipation of the battery cell 21 and reducing the temperature difference between different battery cells 21.

In some embodiments, as shown in FIG. 12 and FIG. 13, the thermally conductive piece 3 includes a graphite layer 34. The graphite layer 34 is a main component for the thermally conductive piece 3 to implement heat conduction. The surfaces of the graphite layer 34 on both sides are overlaid with an insulation layer 35 to reduce the risk that the graphite layer 34 leads to electrical conduction between the battery cells 21 and consequently affects the circuit safety of the cell assembly 2.

Optionally, the insulation layer 35 is bonded and fixed to the graphite layer 34 by a bonding layer 36 to improve the reliability of connection between the insulation layer 35 and the graphite layer 34.

In some embodiments, the battery pack includes a heating element 7. The heating element 7 includes a plurality of heating portions 71 and a plurality of bridging portions 72. Each heating portion 71 is disposed between two different adjacent battery cells 21. The heating portion 71 is connected to at least one battery cell 21. Each battery cell 21 is heated by the heating portion 71. The bridging portion 72 is disposed on one side of the cell 21 module along the second direction Y. Each bridging portion 72 connects two adjacent heating portions 71.

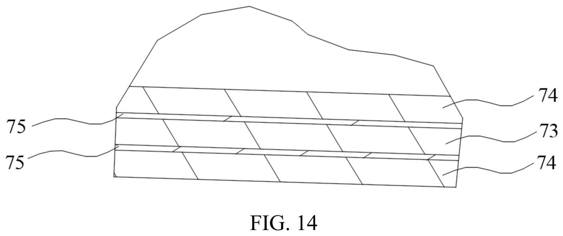

In some embodiments, as shown in FIG. 14, the heating element 7 includes a heating wire 73. The heating wire 73 is a main component of the heating element 7 to implement instant heating. The surfaces of the heating wire 73 on both sides are overlaid with an insulation film 74 to reduce the risk that the heating wire 73 leads to electrical conduction between the battery cells 21 and consequently affects the circuit safety of the cell assembly 2.

In some embodiments, the insulation film 74 is bonded and fixed to the heating wire 73 by an adhesive layer 75 to improve the reliability of connection between the insulation film 74 and the heating wire 73.

The thermal conductivity of the insulation film 74 is greater than or equal to 0.1 W/(m·K) and less than or equal to 0.2 W/(m·K), thereby enabling the insulation film 74 to be thermally conductive and slowly heat the battery cell 21.

In some embodiments, the heating element 7 includes N-2 heating portions 71. The cell assembly 2 includes N-3 buffers 5. Each buffer 5 is located between different adjacent battery cells 21.

The buffer 5 is configured to provide an expansion space for the battery cell 21. The thermal conductivity of the buffer 5 at 25 °C is less than 0.5 W/(m·K).

Optionally, the thermal conductivity of the buffer 5 at 25 °C is less than 0.05 W/(m·K).

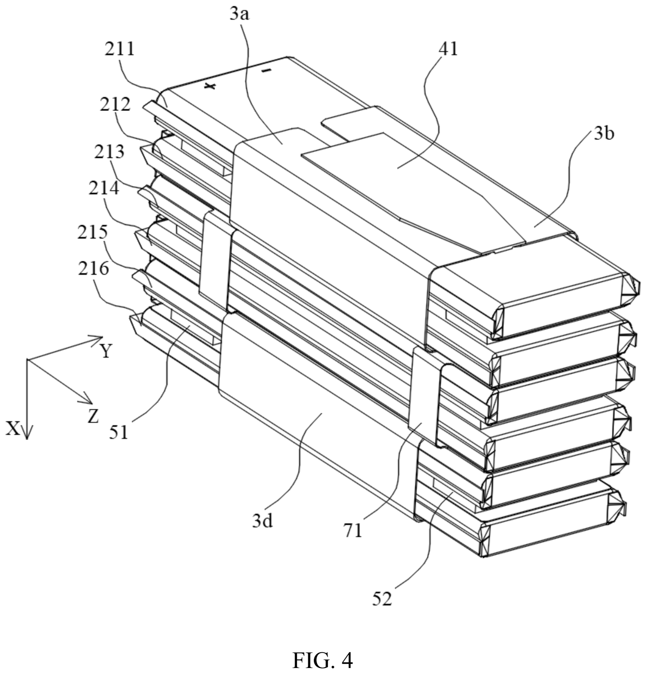

In some embodiments, referring to FIG. 4, the buffer 5 includes a first buffer 51 and a second buffer 52, the first buffer 51 and the second buffer 52 are spaced apart from each other. In other embodiments, the buffer 5 may be integrally formed.

In some embodiments, each thermally conductive portion 31 is connected to an adjacent battery cell 21, and is spaced apart from another adjacent battery cell 21 by the heating portion 71 or the buffer 5. The thermal conductivity of the heating portion 71 is less than that of the thermally conductive portion 31, and the thermal conductivity of the buffer 5 is less than that of the thermally conductive portion 31, thereby reducing transfer of the heat from the other battery cell 21 to the thermally conductive portion 31.

In some embodiments, the thermally conductive portion 31 is physically separated from another adjacent battery cell 21. "Physical separation" means that there is a clearance between the thermally conductive portion 31 and the battery cell 21, and the clearance is not filled with any other filler.

In an embodiment in which the cell assembly 2 includes six battery cells 21, the heating element 7 includes a first heating portion 71a, a second heating portion 71b, a third heating portion 71c, and a fourth heating portion 71d. The heating element 7 includes a first bridging portion 72a, a second bridging portion 72b, and a third bridging portion 72c.

The first bridging portion 72a is connected between the first heating portion 71a and the second heating portion 71b. The first bridging portion 72a is configured to connect heating circuits of the first heating portion 71a and the second heating portion 71b. The first heating portion 71a is disposed between the first battery cell 211 and the second battery cell 212, and is bonded and fixed to the first battery cell 211 to heat the first battery cell 211 in a relatively low temperature environment.

In some embodiments, one buffer 5 is located between the first battery cell 211 and the second battery cell 212 to provide an expansion space for the first battery cell 211 and the second battery cell 212.

In some embodiments, the first buffer 51 and the second buffer 52 are located between the first battery cell 211 and the second battery cell 212 such that a clearance is formed between the first battery cell 211 and the second battery cell 212. During heating, the clearance reduces transfer of the heat of the first heating portion 71a to the second battery cell 212. In other embodiments, the buffer 5 is integrally formed. The buffer 5 covers the first heating portion 71a, thereby reducing transfer of the heat of the first heating portion 71a to the second battery cell 212.

In some embodiments, the second bridging portion 72b is connected between the second heating portion 71b and the third heating portion 71c. The second bridging portion 72b is configured to connect heating circuits of the second heating portion 71b and the third heating portion 71c. The second heating portion 71b is disposed between the second battery cell 212 and the third battery cell 213, and is bonded and fixed to the third battery cell 213. The second thermally conductive portion 31b is located between the second battery cell 212 and the second heating portion 71. During heating, the second thermally conductive portion 31b transfers the heat of the second heating portion 71b to the second battery cell 212, and the second heating portion 71b heats both the second battery cell 212 and the third battery cell 213 at the same time. When the second thermally conductive portion 31b dissipates heat, the second heating portion 71b can restrict the heat of the third battery cell 213 from being transferred to the second thermally conductive portion 31b.

In some embodiments, the second heating portion 71b may be in direct contact with the second thermally conductive portion 31b.

In some embodiments, the third bridging portion 72c is connected between the third heating portion 71c and the fourth heating portion 71d. The third bridging portion 72c is configured to connect heating circuits of the third heating portion 71c and the fourth heating portion 71d. The third heating portion 71c is disposed between the fourth battery cell 214 and the fifth battery cell 215, and is bonded and fixed to the fourth battery cell 214. The third thermally conductive portion 31c is disposed between the fourth battery cell 214 and the fifth battery cell 215. During heating, the third thermally conductive portion 31c transfers the heat of the third heating portion 71c to the fourth battery cell 214, and the third heating portion 71c heats the fourth battery cell 214 and the fifth battery cell 215.

In some embodiments, the third heating portion 71c may be in direct contact with the third thermally conductive portion 31c.

In some embodiments, the fourth heating portion 71d is disposed between the fifth battery cell 215 and the sixth battery cell 216, and is bonded and fixed to the sixth battery cell 216 to heat the fifth battery cell 215 in a relatively low temperature environment.

In some embodiments, one buffer 5 is located between the fifth battery cell 215 and the sixth battery cell 216 to provide an expansion space for the fifth battery cell 215 and the sixth battery cell 216.

In some embodiments, the first buffer 51 and the second buffer 52 are located between the fifth battery cell 215 and the sixth battery cell 216 such that a clearance is formed between the fifth battery cell 215 and the sixth battery cell 216. During heating, the clearance reduces transfer of the heat of the fourth heating portion 71d to the fifth battery cell 215. In other embodiments, the buffer 5 is integrally formed. The buffer 5 covers the fourth heating portion 71d, thereby reducing transfer of the heat of the fourth heating portion 71d to the fifth battery cell 215.

In some embodiments, one buffer 5 is located between the third battery cell 213 and the fourth battery cell 214 to provide an expansion space for the third battery cell 213 and the fourth battery cell 214.

In some embodiments, the first buffer 51 and the second buffer 52 are located between the third battery cell 213 and the fourth battery cell 214 such that a clearance is formed between the third battery cell 213 and the fourth battery cell 214. The clearance reduces heat transfer between the first thermally conductive portion 31a and the fourth thermally conductive portion 31d.

In other embodiments, the buffer 5 is integrally formed. The buffer 5 covers the first thermally conductive portion 31a and the fourth thermally conductive portion 31d, thereby reducing heat transfer between the first thermally conductive portion 31a and the fourth thermally conductive portion 31d.

The first bridging portion 72a and the third bridging portion 72c are located on one side of the cell assembly 2 along the second direction Y. The second bridging portion 72b is located on the other side of the cell assembly 2 along the second direction Y. In this way, the first heating portion 71a, the first bridging portion 72a, the second heating portion 71b, the second bridging portion 72b, the third heating portion 71c, the third bridging portion 72c, and the fourth heating portion 71d are electrically connected in series.

Along the second direction Y, the first bridging portion 72 a and the second battery cell 212 are spaced apart from each other, or the first bridging portion 72 a is in direct contact with the second battery cell 212, and along the second direction Y, the first bridging portion 72a and the second extension portion 32b are spaced apart from each other, or the first bridging portion 72a is in direct contact with the second extension portion 32b.

Along the second direction Y, the second bridging portion 72b and the third battery cell 213 are spaced apart from each other, or the second bridging portion 72b is in direct contact with the third battery cell 213; and along the second direction Y, the second bridging portion 72b and the fourth battery cell 214 are spaced apart from each other, or the second bridging portion 72b is in direct contact with the fourth battery cell 214.

Along the second direction Y, the third bridging portion 72c and the fifth battery cell 215 are spaced apart from each other, or the third bridging portion 72c in direct contact with the fifth battery cell 215; and along the second direction Y, the third bridging portion 72c and the third extension portion 32c spaced apart from each other, or the third bridging portion 72c in direct contact with the third extension portion 32c.

In some embodiments, as shown in FIG. 2, the cell assembly 2 includes a fixing piece 6. The fixing piece 6 surrounds the cell assembly 2 along the first direction X and the second direction Y. The fixing piece 6 limits movement of each battery cell 21 and fixes the plurality of battery cells 21 to form a cell assembly 2.

Along the first direction X, a projection of the fixing piece 6 and a projection of the first thermally conductive piece 3a are spaced apart from each other, thereby reducing mutual interference between the fixing piece 6 and the first thermally conductive piece 3a and consequently reducing the adverse effect on the heat conduction efficiency of the first thermally conductive piece 3a.

Along the first direction X, the projection of the fixing piece 6 and the projection of the second thermally conductive piece 3b are spaced apart from each other, thereby reducing mutual interference between the fixing piece 6 and the second thermally conductive piece 3b and consequently reducing the adverse effect on the heat conduction efficiency of the second thermally conductive piece 3b.

Along the first direction X, the projection of the fixing piece 6 and the projection of the third thermally conductive piece 3c are spaced apart from each other, thereby reducing mutual interference between the fixing piece 6 and the third thermally conductive piece 3c and consequently reducing the adverse effect on the heat conduction efficiency of the third thermally conductive piece 3c.

Along the first direction X, the projection of the fixing piece 6 and the projection of the fourth thermally conductive piece 3d are spaced apart from each other, thereby reducing mutual interference between the fixing piece 6 and the fourth thermally conductive piece 3d and consequently reducing the adverse effect on the heat conduction efficiency of the fourth thermally conductive piece 3d.

In some embodiments, along the first direction X, the projection of the fixing piece 6 at least partially overlaps the projection of the buffer 5. The buffer 5 provides support for the fixing piece 6, thereby reducing the probability of bending and deformation of the battery cell 21 caused by stress concentration at a binding position of the fixing piece 6, and improving the safety of the cell assembly 2.

An embodiment of this application provides an electrical device. The electrical device includes the battery pack disclosed above. The battery pack is configured to provide electrical energy.

In the electrical device provided in embodiments of this application, a thermally conductive piece 3 is disposed in the battery pack, the thermally conductive portion 31 is disposed between two adjacent battery cells 21, and the connecting portion 33 is connected to the top wall 111 or the bottom wall 112 of the shell 1. The connecting portion 33 can transfer the heat generated at the center of the cell assembly 2 to the heat sink 13 of the shell 1 during the charging and discharging of each battery cell 21, and the heat is dissipated by the heat sink 13, thereby effectively reducing the accumulation of heat at the center of the cell assembly 2 and improving the safety of the battery pack.

Described above are merely specific embodiments of this application. A person skilled in the art clearly understands that, for ease and brevity of description, a detailed working process of the above-mentioned systems, modules, and units may be learned with reference to a corresponding process described in the preceding method embodiments, the details of which are omitted here. It is understood that the scope of protection of this application is not limited to such embodiments,.

## Claims

1. A battery pack, comprising:
a shell (1) provided with a top wall (111) and a bottom wall (112) disposed opposite to each other along a first direction (X);
a cell assembly (2) disposed inside the shell (1), wherein the cell assembly (2) comprises a plurality of battery cells (21) arranged along the first direction (X); and
a plurality of thermally conductive pieces (3), each of the thermally conductive pieces (3) comprises a thermally conductive portion (31) and a connecting portion (33) connected to the thermally conductive portion (31), each thermally conductive portion (31) is located between different adjacent battery cells (21), the thermally conductive portion (31) is connected to at least one of the adjacent battery cells (21), and the connecting portion (33) is connected to the top wall (111) or the bottom wall (112).

2. The battery pack according to claim 1, wherein each thermally conductive portion (31) is connected to a different battery cell (21), and the each thermally conductive portion (31) is bonded and fixed to a corresponding battery cell (21).

3. The battery pack according to claim 1 or 2, wherein the cell assembly (2) comprise N battery cells (21), the N battery cells (21) comprise a first battery cell (211) closest to the top wall (111) and an Nth battery cell (216) closest to the bottom wall (112), the first battery cell (211) is connected to the top wall (111), and the Nth battery cell (216) is connected to the bottom wall (112);
N-2 thermally conductive pieces (3) are disposed, and each battery cell (21) located between the first battery cell (211) and the Nth battery cell (216) is connected to one thermally conductive portion (31); and
N is a positive integer greater than 2.

4. The battery pack according to claim 3, wherein each thermally conductive piece (3) comprises an extension portion (32), and the extension portion (32) is located on one side of the cell assembly (2) along a second direction (Y); and
at least two extension portions (32) are located on a same side of the cell assembly (2) along the second direction (Y), projections of the at least two extension portions (32) along a third direction (Z) are spaced apart from each other; and the first direction (X), the second direction (Y), and the third direction (Z) are perpendicular to each other.

5. The battery pack according to claim 4, wherein each extension portion (32) is spaced apart from each battery cell (21).

6. The battery pack according to claim 4 or 5, wherein the cell assembly (2) comprises a fixing piece (6), the fixing piece (6) surrounds the plurality of battery cells (21) along the first direction (X) and the second direction (Y), the fixing piece (6) fixes the plurality of battery cells (21); and along the first direction (X), a projection of the fixing piece (6) is spaced apart from a projection of each thermally conductive piece (3); and
each battery cell (21) comprises electrode terminals (21a), and the electrode terminals (21a) are located on one side of the cell assembly (2) along the third direction (Z).

7. The battery pack according to any one of claims 4 to 6, wherein at least two connecting portions (33) are located on a same side of the cell assembly (2) along the first direction (X), and projections of the at least two connecting portions (33) along the first direction (X) are spaced apart from each other.

8. The battery pack according to claim 7, wherein the battery pack comprises a first heat transfer piece (41), the first heat transfer piece (41) is disposed between the top wall (111) and the cell assembly (2), and the first heat transfer piece (41) is connected to the first battery cell (211); and
a thermal conductivity of the first heat transfer piece (41) is greater than or equal to 1 W/(m·K).

9. The battery pack according to claim 7 or 8, wherein the battery pack comprises a second heat transfer piece (42), the second heat transfer piece (42) is disposed between the bottom wall (112) and the cell assembly (2), and the second heat transfer piece (42) is connected to the Nth battery cell (216); and
a thermal conductivity of the second heat transfer piece (42) is greater than or equal to 1 W/(m·K).

10. The battery pack according to any one of claims 4 to 9, wherein the battery pack comprises a heating element (7), the heating element (7) comprises a plurality of heating portions (71) and a plurality of bridging portions (72), and each bridging portion (72) connects two adjacent heating portions (71); and
each heating portion (71) is disposed between two different adjacent battery cells (21), the heating portion (71) is connected to at least one battery cell (21) of the adjacent battery cells (21), and the bridging portion (72) is disposed on one side of the cell assembly (2) along the second direction (Y).

11. The battery pack according to claim 10, wherein the heating element (7) comprises a heating wire (73), both sides of the heating wire (73) are overlaid with an insulation film (74), and a thermal conductivity of the insulation film (74) at 25 °C is greater than or equal to 0.1 W/(m·K) and less than or equal to 0.2 W/(m·K).

12. The battery pack according to claim 10 or 11, wherein the heating element (7) comprises N-2 heating portions (71), the cell assembly (2) comprises N-3 buffers (5), and each buffer (5) is located between different adjacent battery cells (21);
the buffer (5) is configured to provide an expansion space for the battery cell (21), and a thermal conductivity of the buffer (5) at 25 °C is less than 0.5 W/(m·K); and
each thermally conductive portion (31) is connected to one battery cell (21) of adjacent battery cells (21), and the thermally conductive portion (31) is spaced apart from another adjacent battery cell (21) by the heating portion (71) or the buffer (5), or the thermally conductive portion (31) is physically separated from another adjacent battery cell (21).

13. The battery pack according to any one of claims 1 to 12, wherein the thermally conductive piece (3) is a graphite-based thermally conductive piece, and the graphite-based thermally conductive piece is bent along a length direction thereof to form the thermally conductive portion (31) and the connecting portion (33); and
along the length direction of the graphite-based thermally conductive piece, an in-plane thermal conductivity of the graphite-based thermally conductive piece is greater than or equal to 800 W/(m·K).

14. The battery pack according to claim 13, wherein along a thickness direction of the graphite-based thermal conductive piece, the thermal conductivity of the graphite-based thermally conductive piece is less than or equal to 100 W/(m·K).

15. An electrical device, wherein the electrical device comprises the battery pack according to any one of claims 1 to 14, and the battery pack is configured to provide electrical energy.
